# EUROPEAN PATENT SPECIFICATION

(11) **EP 0 779 853 B1**
(45) Date of publication and mention of the grant of the patent: **06.05.1999**
(21) Application number: 95928822.6
(22) Date of filing: 10.08.1995
(51) Int. Cl.: B29B 13/02, C09J 133/04, B65D 65/46, B29C 39/10

(54) **METHOD OF MAKING A PACKAGED HOT MELT ADHESIVE**
VERFAHREN ZUR HERSTELLUNG VON VERPACKTEM HEI CHMELZENDEN KLEBSTOFF
PROCEDE DE FABRICATION D'UN ADHESIF THERMOFUSIBLE CONDITIONNE

(30) Priority: 09.09.1994 US 303602
(43) Date of publication of application: 25.06.1997
(73) Proprietor: MINNESOTA MINING AND MANUFACTURING COMPANY, St. Paul, Minnesota 55133-3427 (US)
(72) Inventor: HAMER, Craig, E., Saint Paul, MN 55133-3427 (US); MOON, John, D., Saint Paul, MN 55133 (US); KOTNOUR, Thomas, A., Saint Paul, MN 55133-3427 (US)
(74) Representative: VOSSIUS & PARTNER
(86) International application number: US9510234
(87) International publication number: WO9607522

(56) References cited:
- EP-A- 0 469 564
- EP-A- 0 547 798
- EP-A- 0 608 891
- WO-A-89/00106
- DE-A- 4 205 919
- US-A- 4 052 527
- US-A- 4 810 523

## Description

### Field of the Invention

The present invention relates to a method of making a packaged thermoplastic or thermosettable hot melt adhesive.

### Background of the Invention

Methods of packaging hot melt adhesives and the resulting packaged adhesives are known. DE-A-36 25 358 describes a hot melt adhesive block in a thermoplastic film. The film is melted and mixed with the adhesive in an extrusion process.

U.S.-A-5,257,491 describes a method of packaging a thermoplastic or thermosetting hot melt adhesive in which a portion of an adhesive composition is surrounded with a plastic packaging material. The plastic packaging material does not substantially adversely affect the adhesive characteristics of a molten mixture of the adhesive and the plastic packaging material.

WO 93/23224 describes a method for packaging hot melt adhesive compositions in which molten hot melt adhesive is poured into a mold lined with a plastic film. The plastic film is meltable with the adhesive composition and blendable into the molten adhesive composition.

A method for producing thermoplastic mold materials useful for producing molded articles is described in DE-A-1 694 837, published July 29, 1971. In the described method, the polymerization material is allowed to polymerize in a hollow profile that functions as a polymerization vessel. The hollow profile may be made of the same polymer produced in the polymerization process.

Methods of producing hot melt adhesives in sealed reaction vessels are known. U.S.-A-4,810,523 describes a method for producing hot melt adhesives in which a liquid polymerizable monomer composition is introduced into a sealable reaction vessel and polymerized by ionizing radiation. The adhesive is then removed from the reaction vessel before hot melt application. The reaction vessel may be a lined cylindrical pressure vessel or a multilayer bag. See column 8, line 58, to column 9, line 8, of U.S.-A-4,810,523.

Although methods of producing hot melt adhesives and methods of packaging hot melt adhesives are known, there is a need for a simplified process for making a packaged hot melt adhesive.

### Summary of the Invention

Accordingly, the present invention provides a process for making a packaged hot melt adhesive in which the packaging material is compatible with the adhesive. Specifically, the invention concerns a method of making a packaged, thermoplastic or thermosettable hot melt adhesive in which a liquid pre-adhesive composition which upon exposure to transmissive energy polymerizes to provide a thermoplastic or thermosettable hot melt adhesive is first provided, then substantially completely surrounded with a packaging material, exposed to transmissive energy capable of polymerizing the pre-adhesive composition, and allowed to polymerize to provide the thermoplastic or thermosettable hot melt adhesive. The packaging material does not substantially adversely affect the adhesive properties of a hot melt coated mixture of the adhesive and the packaging material. A hot melt coated mixture of said adhesive and said packaging material has a storage modulus when measured in torsional shear at 25°C and at 1 radian/second of between 10³ and 10⁷ Pa (10⁴ and 10⁸ dynes/cm²).

The invention also provides a method of making a thermoplastic or thermosettable hot melt adhesive in which the packaged, thermoplastic or thermosettable hot melt adhesive produced above is introduced into a vessel in which the adhesive and its packaging material are melted. The invention also provides a method of making a pressure sensitive adhesive-coated sheet in which the packaged, thermoplastic or thermosettable hot melt adhesive is melted in a vessel and then coated onto a sheet material or another substrate. The invention provides a method of making a thermoplastic or thermosettable hot melt adhesive in which the liquid pre-adhesive composition is continuously introduced into a hollow profile of a polymeric film material which does not substantially adversely affect the adhesive characteristics of a hot melt coated mixture of the adhesive and the polymeric film material.

The invention also provides a packaged, thermoplastic or thermosettable pre-adhesive comprising a pre-adhesive composition substantially completely surrounded by a packaging material. The pre-adhesive composition is a liquid having a viscosity of less than 50,000 mPa.s (centipoises) at 25°C and capable of polymerizing in the presence of transmissive energy to provide a thermoplastic or thermosettable hot melt adhesive.

Additional features and advantages of the invention will be set forth in the description which follows, and in part will be apparent from the description, or may be learned by practice of the invention. The objectives and other advantages of the invention will be realized and attained by the methods and articles particularly pointed out in the written description and claims hereof.

It is to be understood that both the foregoing general description and the following detailed description are exemplary and explanatory and are intended to provide further explanation of the invention as claimed.

### Detailed Description of the Invention

The present invention provides a method of making a packaged, thermoplastic or thermosettable hot melt adhesive comprising:
(a) providing a liquid pre-adhesive composition which upon exposure to transmissive energy polymerizes to provide a thermoplastic or thermosettable hot melt adhesive;
(b) substantially completely surrounding the pre-adhesive composition with a packaging material;
(c) exposing the pre-adhesive composition to transmissive energy selected from ultraviolet radiation, thermal radiation or thermal conduction and
(d) allowing polymerization of the pre-adhesive composition to occur to provide said thermoplastic or thermosettable hot melt adhesive.
The packaging material does not substantially adversely affect the adhesive properties of a hot melt coated mixture of the adhesive and the packaging material, and a hot melt coated mixture of the adhesive and the packaging material has a storage modulus when measured in torsional shear at 25°C and at 1 radian/second of between 10³ and 10⁷ Pa (10⁴ and 10⁸ dynes/cm²). The desired adhesive properties are determined by the requirements of the end user; desired adhesive properties include peel strength and shear strength. The liquid pre-adhesive composition preferably polymerizes to provide a thermoplastic hot melt adhesive upon exposure to transmissive energy.

The invention also provides a method of making two or more packages of a packaged, thermoplastic or thermosettable hot melt adhesive. In this method, two or more portions of a liquid pre-adhesive are provided and each of the portions is completely surrounded with a packaging material. These portions are then polymerized as described above.

In a preferred embodiment, the liquid pre-adhesive composition is completely surrounded by the packaging material. Preferably, from 0.1 to 500 g of liquid pre-adhesive composition is completely surrounded by the packaging material. In another preferred embodiment, from 3 to 100 g of liquid pre-adhesive composition is completely surrounded by the packaging material. In another embodiment of the invention, the liquid pre-adhesive composition is substantially completely surrounded by two substantially parallel sheets of packaging material. In another embodiment of the invention, the liquid pre-adhesive composition is substantially completely surrounded by a hollow profile of packaging material with a length:square root of the cross-sectional area ratio of at least 30:1.

The liquid pre-adhesive composition preferably has a melting point of 40°C or less, more preferably 25°C or less. In a preferred embodiment, the melting point of the liquid pre-adhesive composition is 0°C or less. The liquid pre-adhesive composition preferably has a viscosity at 25°C of less than 50,000 mPa.s (centipoises), more preferably 5,000 centipoises. When the liquid pre-adhesive composition is an unfilled monomeric mixture, a viscosity of less than 50 centipoises at 25°C is preferred.

The liquid pre-adhesive composition may be a monomeric mixture or a prepolymeric mixture. A prepolymeric mixture is a syrup formed by the partial polymerization of the monomeric materials that can be polymerized to form a hot melt adhesive. Preferably, the monomeric materials can be polymerized to form a hot melt pressure sensitive adhesive composition.

A small amount of volatile, non-polymerizable solvent may be included in the pre-adhesive composition to dissolve other additives, such as a crosslinking agent. The liquid pre-adhesive composition preferably contains less than 10 weight percent of solvent. In a preferred embodiment, the pre-adhesive composition contains less than 5 weight percent of solvent, and in another preferred embodiment, the pre-adhesive composition contains less than 1 weight percent of solvent. In a preferred embodiment, the pre-adhesive composition is essentially free of solvent.

Preferred materials for producing a hot melt pressure sensitive adhesive include acrylate and methacrylate polymers or co-polymers. Such polymers can be formed by polymerizing 50 to 100 parts by weight of one or more monomeric acrylic or methacrylic esters of non-tertiary alkyl alcohols, with the alkyl groups having from 1 to 20 carbon atoms, and preferably from 3 to 18 carbon atoms. Suitable acrylate monomers include methyl acrylate, ethyl acrylate, n-butyl acrylate, lauryl acrylate, 2-ethylhexyl acrylate, cyclohexyl acrylate, iso-octyl acrylate, octadecyl acrylate, nonyl acrylate, decyl acrylate, and dodecyl acrylate.

Optionally, one or more monoethylenically unsaturated co-monomers may be polymerized with the acrylate monomers in amounts from about 0 to 50 parts co-monomer. Useful co-monomers are those having a homopolymer glass transition temperature greater than the glass transition temperature of the acrylate homopolymer. Examples of suitable co-monomers include acrylic acid, acrylamide, substituted acrylamides such as N,N-dimethyl acrylamide, itaconic acid, methacrylic acid, acrylonitrile, vinyl acetate, N-vinyl pyrrolidone, isobornyl acrylate, cyano ethyl acrylate, N-vinylcaprolactam, hydroxyalkylacrylates, and alkyl vinyl ethers.

Depending upon the method of polymerization, the pre-adhesive composition may include an appropriate initiator. For polymerization by ultraviolet light, a photoinitiator is included. Useful photoinitiators include substituted acetophenones such as benzyl dimethyl ketal and 1-hydroxycyclohexyl phenyl ketone, substituted alpha-ketols such as 2-methyl-2-hydroxypropiophenone, benzoin ethers such as benzoin methyl ether, substituted benzoin ethers such as anisoin methyl ether, aromatic sulfonyl chlorides, and photoactive oximes. The photoinitiator may be used in an amount from about 0.01 to about 5.0 parts by weight per 100 parts of monomer, preferably in an amount from 0.1 to 0.5 parts by weight.

For thermal polymerization, a thermal initiator is included. Thermal initiators useful in the present invention include, but are not limited to azo, peroxide, persulfate, and redox initiators.

Suitable azo initiators include, but are not limited to, 2,2'-azobis(4-methoxy-2,4-dimethylvaleronitrile) (VAZO™ 33); 2,2'-azobis(2-amidinopropane) dihydrochloride (VAZO™ 50); 2,2'-azobis(2,4-dimethylvaler-onitrile) (VAZO™ 52); 2,2'-azobis(isobutyronitrile) (VAZO™ 64); 2,2'-azobis-2-methylbutyronitrile (VAZO™ 67); (1,1'-azobis(1-cyclohexanecarbonitrile) (VAZO™ 88), all of which are available from DuPont Chemicals, and 2,2'-azobis(methyl isobutyrate) (V-601) available from Wako Chemicals.

Suitable peroxide initiators include, but are not limited to, benzoyl peroxide, acetyl peroxide, lauroyl peroxide, decanoyl peroxide, dicetyl peroxydicarbonate, di(4-t-butylcyclohexyl) peroxydicarbonate (PERKADOX™ 16S, available from AKZO Chemicals), di(2-ethylhexyl) peroxydicarbonate, t-butylperoxypivalate (Lupersol™ 11, available from Atochem), t-butylperoxy-2-ethylhexanoate (Trigonox™ 21-C50, available from Akzo Chemicals, Inc.), and dicumyl peroxide.

Suitable persulfate initiators include, but are not limited to, potassium persulfate, sodium persulfate, and ammonium persulfate.

Suitable redox (oxidation-reduction) initiators include, but are not limited to, combinations of the above persulfate initiators with reducing agents such as sodium metabisulfite and sodium bisulfite; systems based on organic peroxides and tertiary amines (for example, benzoyl peroxide plus dimethylaniline); and systems based on organic hydroperoxides and transition metals, for example, cumene hydroperoxide plus cobalt naphthenate.

Other initiators include, but are not limited to pinacols, such as tetraphenyl 1,1,2,2-ethanediol.

Preferred thermal free-radical initiators are selected from the group consisting of azo compounds and peroxides. Most preferred are Lupersol™ 11 and Perkadox™ 16, and mixtures therof; these thermal free-radical initiators are preferred because they do not generate free gas upon initiation.

The thermal initiator may be used in amount from about 0.01 to about 5.0 parts by weight per 100 parts of monomer, preferably from 0.025 to 2 weight percent.

Preferably, the composition also includes a chain transfer agent to control the molecular weight of the polymer. Chain transfer agents are materials which stop free radical polymerization and are generally known in the art. Suitable chain transfer agents include halogenated hydrocarbons such as carbon tetrabromide; sulfur compounds such as lauryl mercaptan, butyl mercaptan, ethanethiol, and 2-mercaptoether; and solvents such as ethanol, isopropanol, and ethyl acetate.

The amount of chain transfer agent that is useful depends upon the desired molecular weight and the type of chain transfer agent. Solvents are useful as chain transfer agents, but they generally are not as active as, for example, the sulfur compounds. The chain transfer agent is typically used in amounts from about 0.001 part to about 10 parts by weight per 100 parts of monomer, and preferably from about 0.01 part to about 0.5 part, and most preferably from about 0.02 part to about 0.20 part.

A preferred liquid pre-adhesive composition comprises:
(a) 50 to 100 parts by weight of a polymerizable component comprising at least one acrylic or methacrylic ester of a non-tertiary alkyl alcohol in which the alkyl group contains 3 to 18 carbon atoms;
(b) 0 to 50 parts by weight of a polymerizable component comprising at least one modifying monomer, other than said acrylic or methacrylic ester, copolymerizable with component (a), the sum of (a) and (b) amounting to 100 parts by weight;
(c) an effective amount of a polymerization initiator; and
(d) an effective amount of a chain transfer agent. The polymerization initiator is preferably a photoinitiator or a thermal initiator.

The liquid pre-adhesive composition may further comprise an effective amount of a crosslinking agent that may be activated after the adhesive has been hot melt coated. The crosslinking agent can be added to the polymerized adhesive before or during hot melt coating, or it can be added to the pre-adhesive composition. When added to the pre-adhesive composition, the crosslinking agent can remain intact as a separate species in the adhesive, or it can be co-polymerized with the monomers. Crosslinking is preferably initiated after hot melt coating, and the crosslinking is preferably initiated by ultraviolet radiation, or ionizing radiation such as gamma radiation or electron beam. Preferred crosslinking agents that can be added after polymerization and before hot melt coating include multi-functional acrylates such as 1,6-hexanedioldiacrylate and trimethylolpropane triacrylate, and substituted triazines such as 2,4-bis(trichloromethyl)-6-(4-methoxyphenyl)-s-triazine and 2,4-bis(trichloromethyl)-6-(3,4-dimethoxyphenyl)-s-triazine, as described in U.S.-A-4,329,384 (Vesley et al.) and 4,330,590 (Vesley). Another class of preferred crosslinking agents are the copolymerizable mono-ethylenically unsaturated aromatic ketone comonomers free of ortho-aromatic hydroxyl groups such as those disclosed in U.S.-A-4,737,559 (Kellen et al.). Specific examples include para-acryloxybenzophenone, para-acryloxyethoxybenzophenone, para-N-(methylacryloxyethyl)-carbamoylethoxybenzophenone, para-acryloxyacetophenone, ortho-acrylamidoacetophenone, and the like.

The acrylate copolymers can be crosslinked by exposure to ultraviolet radiation from, for example, medium pressure mercury arc lamps. It is preferred that crosslinking agents activated by ultraviolet radiation be activated by a different source of energy than that used for the polymerization. For example, low intensity black lights may be used for polymerization and mercury arc lamps may be used for the subsequent crosslinking.

The pre-adhesive composition can further include tackifying resins to increase the tack of the adhesive. The tackifying resins can also be added during the hot melt coating step. Suitable tackifying resins include rosin esters, and aliphatic, aromatic, or mixtures of aliphatic and aromatic synthetic hydrocarbon pure monomer resins. Examples of useful tackifying resins that are commercially available include Foral™ 85 and hydrocarbon resins sold under the Regalrez™ tradename by Hercules, Inc. If used, the amount of tackifying resin can range from about 1 part to about 50 parts by weight per 100 parts of monomer.

In some cases, polymers may be dissolved in the monomers before polymerization to modify the adhesive characteristics. Examples of such polymers include silicone pressure sensitive adhesives, co-polymerizable macromers such as those described in U.S.-A-4,554,324 (Husman et al.), and unsaturated hydrocarbon elastomers.

Other additives can be included in the pre-adhesive composition, or added at the time of hot melt coating to change the properties of the adhesive. Such additives, or fillers, include pigments, glass or polymeric bubbles or beads, fibers, reinforcing agents, hydrophobic or hydrophilic silica, calcium carbonate, toughening agents, fire retardants, antioxidants, finely ground polymeric particles such as polyester, nylon, and polypropylene, and stabilizers. The additives are added in amounts sufficient to obtain the desired end properties.

The packaging material is made of a material that when blended into the adhesive does not substantially adversely affect the desired adhesive characteristics. A hot melt coated adhesive produced from a mixture of the adhesive and the packaging material may have improved adhesive properties compared to hot melt coated adhesive produced from adhesive alone.

In one embodiment of the invention, the pre-adhesive composition is substantially completely surrounded with the packaging material; in another embodiment of the invention, the liquid pre-adhesive composition is completely surrounded with the packaging material. In this embodiment, it is intended that the pre-adhesive composition be completely surrounded by the packaging material, but random variations in production may produce occasional packaged pre-adhesives in which the pre-adhesive composition is not completely surrounded with the packaging material.

The packaging material preferably melts at or below the melting point of the adhesive. The packaging material preferably has a melting point of 200°C or less, preferably 170°C or less. In a preferred embodiment the melting point ranges from 90°C to 150°C. The packaging material may be a flexible thermoplastic polymeric film. The packaging material is preferably selected from ethylene-vinyl acetate, ethylene-acrylic acid, polypropylene, polyethylene, polybutadiene, or ionomeric films. In a preferred embodiment the packaging material is an ethylene-acrylic acid film.

In the practice of the invention, films ranging in thickness from about 0.01 mm to about 0.25 mm may be used. The thicknesses preferably range from about 0.025 mm to about 0.127 mm to obtain films that have good strength during processing while being thin enough to heat seal quickly and minimize the amount of film material used.

The amount of packaging material depends upon the type of material and the desired end properties. The amount of packaging material typically ranges from about 0.5 percent to about 20 percent of the total weight of the pre-adhesive composition and the packaging material. Preferably, the packaging material is between 2 percent and 15 percent by weight, and more preferably between 3 percent and 5 percent. Such packaging materials may contain plasticizers, stabilizers, dyes, perfumes, fillers, slip agents, antiblock agents, and other materials to increase the flexibility, handleability, visibility, or other useful property of the film, as long as they do not adversely affect the desired properties of the adhesive.

The packaging material should be appropriate for the polymerization method used. For example, with photopolymerization, it is necessary to use a film material that is sufficiently transparent to ultraviolet radiation at the wavelengths necessary to effect polymerization.

The transmissive energy is selected from ultraviolet radiation, visible radiation, thermal radiation, or thermal conduction. The transmissive energy is preferably ultraviolet radiation or thermal conduction. Preferably, at least 80 percent of the pre-adhesive is converted to adhesive; more preferably, at least 90 percent of the pre-adhesive is converted to adhesive.

Thermal polymerization can be effected by immersing the packaged composition in a heat exchange medium at temperatures between about 40°C and 100°C for a time sufficient to polymerize the composition. The heat exchange medium may be a forced or impinged gas or a liquid such as water, perfluorinated liquids, glycerine, or propylene glycol. The heat necessary for thermal polymerization may also be provided by a metal platen or heated metal rolls.

The temperature at which the polymerization occurs depends upon the activation temperature of the initiator. For example, polymerization using VAZO™ 64, a commercially available initiator from DuPont Company can be carried out at about 80°C, while Vazo™ 52, also available from DuPont Company, can be used at about 70°C. It is preferable to carry out the polymerization in an appropriate liquid heat exchange medium at a controlled temperature. A suitable liquid heat exchange medium is water, heated to the desired reaction temperature. Commercially available heat transfer fluids may also be used. Additional information concerning thermal polymerization may be found in U.S. Serial No. 08/234,468, filed April 26, 1994, entitled "Thermal Free-Radical Cure Adhesives and Articles Made Thereby".

Polymerization can also be effected by exposure to ultraviolet (UV) radiation as described in U.S.-A-4,181,752 (Martens et al.). In a preferred embodiment, the polymerization is carried out with UV black lights having over 60 percent, and preferably over 75 percent of their emission spectra between 280 to 400 nanometers (nm), with an intensity between about 0.1 to about 25 mW/cm².

During photopolymerization it is desirable to control the temperature by blowing cooling air around the packaged pre-adhesive composition, by running the packaged pre-adhesive composition over a cooled platen, or by immersing the packaged pre-adhesive composition in a water bath or a heat transfer fluid during polymerization. Preferably, the packaged pre-adhesive compositions are immersed in a water bath, with water temperatures between about 5°C and 90°C, preferably below about 30°C. Agitation of the water or fluid helps to avoid hot spots during the reaction.

In a preferred embodiment, after exposing the pre-adhesive composition to transmissive energy and allowing polymerization of the pre-adhesive composition to occur, at least a portion of the pre-adhesive solution has been converted to an adhesive which comprises at least one polymer with a molecular weight of at least 50,000. The weight average molecular weight of the polymerized adhesive composition can range from about 50,000 to about 3,000,000, and preferably from about 100,000 to about 1,800,000, and most preferably from about 200,000 to about 1,500,000.

In a preferred embodiment, the adhesive is a pressure sensitive adhesive at 25°C. In another preferred embodiment, a hot melt coated mixture of the adhesive and the packaging material is a pressure sensitive adhesive at 25°C and has a storage modulus when measured in torsional shear at 25°C and at 1 radian/second of between 10⁴ and 10⁶ Pa (10⁵ and 10⁷ dynes/cm²).

The polymerized adhesives of the invention preferably have a storage modulus (G') when measured in torsional shear at 25°C and at 1 second (or frequency of 1 radian/second) 10³ and 10⁷ Pa (10⁴ and 10⁸ dynes/cm²) and more preferably between 10⁴ and 10⁶ Pa (10⁵ and 10⁷ dynes/cm²). The storage modulus for a polymerized adhesive having a composition of 90 parts isooctyl acrylate and 10 parts acrylic acid is 1.58 10⁵ Pa (1.58 x 10⁶ dynes/cm²) and for an adhesive having a composition of 98 parts isooctyl acrylate and 2 parts acrylic acid is 2.10⁴ Pa (2 x 10⁵ dynes/cm²) as determined by means of a Dynamic Thermal Mechanical Analyzer (DTMA) made by Polymer Laboratories. The instrument subjects the sample to small sinusoidal oscillation in a shear geometry. The shear storage modulus is measured at a frequency of oscillation of 0.1 to 100 Hertz over a temperature range of -100°C to 150°C at a heating rate of 2°C per minute according to ASTM No. D4065-82.

The polymerized adhesives may be used to make a thermoplastic or thermosettable hot melt adhesive by introducing the adhesive and its packaging material into a vessel in which the adhesive and its packaging material are melted. This hot melt adhesive may be used to form a pressure sensitive adhesive sheet by coating the melted adhesive and its packaging material onto a sheet material or another suitable substrate. The sheet material is preferably selected from a tape backing or a release liner. Preferably, the polymerized adhesives are hot melt coated by putting the packaged adhesive in a hot melt coater at a temperature sufficient to melt the packaged adhesive and with sufficient mixing to form a coatable mixture, which is coated onto a substrate. This step can be done conveniently in a heated extruder or a hot melt adhesive gun. If a crosslinking agent is added, the coated adhesive can then be exposed to sufficient UV radiation or ionizing radiation to effect the crosslinking. Crosslinking is preferably initiated after coating.

The steps may be done in-line, i.e., the pre-adhesive composition may be surrounded by the packaging material, polymerized, hot melt coated to form a tape, and optionally crosslinked, or the steps may be performed individually at separate times and sites. For example, the packaged pre-adhesive composition may be polymerized at one time, and extruded and crosslinked at another time.

In one embodiment of the invention, a tape is formed in which the substrate is a tape backing. Typical tape backings include cellulosic materials such as paper, creped paper, and cloth; films such as biaxially oriented polyester, biaxially and monoaxially oriented polypropylene, nylon; foam materials such as polyethylene foams and acrylic foams; and metal foils such as aluminum foil. The backings are usually treated on the back side with a release coating such as silicone, and may be treated prior to hot melt coating to enhance the adhesion of the adhesive to the backing. Treatments useful for enhancing the adhesion of the adhesive to the backing include chemical priming and corona treatment.

In another embodiment of the invention, a transfer tape is formed wherein the substrate is a release liner. The release liner can be coated on one or both sides with a release coating, and the transfer tape is removed from the substrate when used by the end user.

In yet another embodiment, the substrate is the surface of a part to be bonded to another part with the hot melt adhesive. In another embodiment of the invention, the adhesive or a tape made out of the adhesive is used to damp vibrations.

In the practice of one embodiment of the invention, two lengths of thermoplastic film are heat sealed together across the bottom and on each of the lateral edges on a liquid form-fill-seal machine to form an open ended pouch. The pre-adhesive composition is pumped through a hose to fill the pouch, and the pouch is then heat sealed across the top to completely surround the adhesive composition.

Preferably, the form-fill-seal machine is equipped with an impulse sealer to form the top and bottom seal across the pouches. Such a sealer has one or two sets of jaws that clamp the pouch shut before sealing. A sealing wire is then heated to effect the seal, and the seal is cooled before the jaws are released. The sealing temperature is generally above the softening point and below the melting point of the film used to form the pouch.

During the sealing process, it is desirable to get most of the air out of the pouch before sealing. A small amount of air is tolerable so long as the amount of oxygen is not sufficient to interfere with the polymerization process. For ease of handling, it is desirable to seal the pouches as soon as they are filled with the composition, although immediate sealing is not necessary in all cases. In some cases the pre-adhesive composition can alter the packaging material, and it is desirable to cross-seal the pouches within about one minute of filling, more preferably within 30 seconds, and most preferably within 15 seconds. If the pre-adhesive composition decreases the strength of the packaging material, it is preferable to polymerize the composition as soon as possible after the pre-adhesive composition is surrounded by the packaging material. For the combination of acrylate monomers with ethylene acrylic acid, ethylene vinyl acetate, or ionomer films, it is preferable to polymerize the composition within about 24 hours of sealing the pouches.

Alternatively, a single length of film can be folded lengthwise and sealed on one edge, filled with the pre-adhesive composition, and sealed. In another embodiment, a single length of film can be pulled through a forming collar, sealed to form a tube, filled with the composition, and sealed. Another embodiment can be carried out on commercial liquid form-fill-seal machines. A sources of such machines is the Packaging Machinery Division of Eagle Corp. It is contemplated that the seals can be effected in any of a number of different configurations to form multiple pouches across and down the lengths of film. For example, in addition to the seals on the lateral edges, a seal can also be formed down the center of the lengths of film so that a cross seal will form two filled pouches. The pouches can either be left attached to each other by the cross-seals or be cut into individual pouches.

The pre-adhesive composition can then be polymerized to form an adhesive within the polymeric pouch by any of the aforementioned methods. The adhesive within the polymeric pouch may be used to damp vibrations. Alternatively, the adhesive itself may be used to damp vibrations.

In another embodiment of the invention, the pre-adhesive composition is continually introduced into a hollow profile of a polymeric film material, continuously exposed to transmissive energy capable of polymerizing said pre-adhesive composition, continuously polymerized to provide a thermoplastic or thermosettable hot melt adhesive, and the polymeric film material and its contents are continuously introduced into a vessel in which the polymeric film material and its contents are melted. The polymeric film material does not substantially adversely affect the adhesive characteristics of a hot melt coated mixture of the adhesive and the polymeric film material. The hot melt mixture of the adhesive and polymeric film material may be coated onto a sheet material to form a pressure sensitive adhesive-coated sheet. The hollow profile of the polymeric film material is the interior of a continuous tube of polymeric film material. The continuous tube is preferably a cylindrical, elliptical, or rectangular continuous tube. In a preferred embodiment the continuous tube is an elliptical continuous tube. In one embodiment of the invention, the tube does not have cross-seals. The hollow profile of the polymeric film material preferably has a cross-sectional area of from about 0.5 cm² to about 25 cm², more preferably from about 1 cm² to about 10 cm².

In another embodiment of the invention, a pre-adhesive composition is coated onto a carrier web, covered with a sheet material, and polymerized with transmissive energy, wherein the carrier web, the sheet material, or both are compatible, i.e., hot melt coatable, with the adhesive. If both the carrier web and the sheet material are hot melt coatable, the resulting composite can be fed directly into a hot melt coater, or cut into smaller strips or pieces and fed to the hot melt coater. If only one of the carrier web or the sheet material is compatible with the adhesive, the non-compatible entity is removed before the adhesive is hot melt coated. To facilitate handling after the non-compatible entity is removed, the polymerized adhesive can be folded over onto itself so that the compatible entity substantially surrounds the major surfaces of the coated adhesive. The adhesive web can then be fed into a hot melt coater, or it can be cut to smaller strips or pieces before hot melt coating.

If either the carrier web or the sheet material are not compatible with the adhesive, it should be treated, if necessary, so that the adhesive can be removed easily from it. Such treatments include silicone release coatings, polyfluoropolyether coatings, and polyfluoroethylene coatings such as Teflon™.

The carrier web should provide sufficient strength to support the coated pre-adhesive composition during polymerization, or it can be supported by a platen during polymerization. The carrier web can be an endless conveyor belt, or it can be a flexible material which can be wound into a roll with the adhesive; the carrier web is itself a sheet material. Endless conveyor belts can be made from silicone elastomers; polymeric films such as those made from polyfluoroethylene, polyester, nylon, polycarbonate, and the like; metals such as stainless steel; rubber; glass fibers; and the like. Useful flexible materials include paper and polymeric films such as those made from polyester, nylon, polycarbonates, polyolefins, ethylene acrylic acid, ethylene vinyl acetate, ionomers, and the like. Compatible flexible materials include polyolefins such as polypropylene, polyethylene, and polybutadiene; ethylene acrylic acid; ethylene vinyl acetate; and ionomers.

Likewise, the sheet material can be made from the aforementioned flexible materials as well as non-flexible plates made of glass, polymers, or metals. If the pre-adhesive composition is to be photopolymerized, the carrier web, the sheet material, or both should be sufficiently transparent to actinic radiation to effect polymerization.

In another embodiment of the invention, the pre-adhesive composition is coated onto a carrier web and polymerized with transmissive energy; the coated pre-adhesive is not covered with a sheet material. The carrier web is compatible with the adhesive. In a preferred embodiment, when the coated pre-adhesive is not covered with a sheet material, the polymerization is conducted in an inert atmosphere.

The invention also provides a packaged, thermoplastic or thermosettable hot melt pre-adhesive comprising a pre-adhesive composition substantially completely surrounded by a packaging material; the pre-adhesive composition is a liquid having a viscosity of less than 50,000 mPa.s (centipoises) at 25°C and capable of polymerizing in the presence of transmissive energy to provide a thermoplastic or thermosettable hot melt adhesive, said packaging material selected so to not substantially adversely affect the adhesive properties of a hot melt coated mixture of the packaging material and an adhesive produced from polymerization of the pre-adhesive composition; the hot melt coated mixture of the adhesive and the packaging material preferably has a storage modulus when measured in torsional shear at 25°C and at 1 radian/second of between 10³ and 10⁷ Pa (10⁴ and 10⁸ dynes/cm²). The adhesive is obtainable from the pre-adhesive composition by:
(a) exposing the pre-adhesive composition to transmissive energy capable of polymerizing the pre-adhesive composition; and
(b) allowing polymerization of the pre-adhesive composition to occur to provide the thermoplastic or thermosettable hot melt adhesive.

In another preferred embodiment of the packaged pre-adhesive, the pre-adhesive composition has a viscosity of less than 5,000 mPa.s (centipoises) at 25°C; in another embodiment the pre-adhesive composition has a viscosity of less than 50 mPa.s (centipoises) at 25°C. The packaging material is preferably a flexible thermoplastic polymeric film. The packaging material is preferably selected from ethylene-vinyl acetate, ethylene-acrylic acid, polypropylene, polyethylene, polybutadiene, or ionomeric films.

In another embodiment of the packaged pre-adhesive, the pre-adhesive composition comprises:
(a) 50 to 100 parts by weight of a polymerizable component comprising at least one acrylic or methacrylic ester of a non-tertiary alkyl alcohol in which the alkyl group contains 3 to 18 carbon atoms;
(b) 0 to 50 parts by weight of a polymerizable component comprising at least one modifying monomer, other than said acrylic or methacrylic ester, copolymerizable with component (a), the sum of (a) and (b) amounting to 100 parts by weight;
(c) an effective amount of a polymerization initiator; and
(d) an effective amount of a chain transfer agent.

### Test Procedures

### MOLECULAR WEIGHT

The molecular weight of the polymer is determined (before hot melt coating and cross linking) by conventional gel permeation chromatography. The instrumentation includes a Hewlett-Packard Model 1090 chromatograph, a Hewlett-Packard Model 1047A Refractive Index detector, and a variable wavelength UV detector set at 254 nanometers. The chromatograph was equipped with a mixed bed pore size from Jordi Associates and a W-100 Angstrom column from Waters Associates, or two 20 micron mixed bed columns (PL Gel) from Polymer Labs. The system was calibrated with Polystyrene standards from Pressure Chemical Co. The signal was converted to digital response using Nelson Analytical hardware and software, and molecular weights (weight average and number average) and polydispersity were determined on a Hewlett-Packard Model 9000/200 computer. The weight-average molecular weight (M_{W}) and the polydispersity (P) were calculated according to accepted practices. The polydispersity is calculated by dividing the weight-average molecular weight by the number-average molecular weight. GPC test methods are further explained in "Modern Size Exclusion Liquid Chromatography: Practice of Gel Permeation Chromatography," John Wiley and Sons, 1979.

The samples were prepared by pre-treating with diazomethane in diethyl ether. After drying, the samples were dissolved in tetrahydrofuran (THF) at a concentration of 1.5 milligrams per milliliter of THF, and filtered through a 0.2 micrometer Teflon™ filter. Samples were injected into the columns at volumes of 50 micro-liters and eluted at a rate of 1 ml per minute through columns maintained at about 21°C.

### 90° PEEL ADHESION

One of the liners is removed from a strip of pressure sensitive adhesive transfer tape measuring 12.7 cm by 1.27 cm, and laminated to a 0.0508 mm (2 mil) thick aluminum foil. The other liner is then removed and the tape is adhered to a 5.08 cm by 12.7 cm stainless steel panel that had been wiped clean once with acetone and wiped twice with heptane. The tape is rolled down with one pass of a 2.05 kg hard rubber roller. The panel is conditioned at room temperature (about 21°C) for about 15 minutes for the initial peel adhesion (INIT) or 72 hours for aged peel adhesion (AGED), then mounted on a peel tester such that the tape is pulled off at a 90° angle at a speed of 30.5 cm per minute. The results are reported in the tables in Newtons per decimeter (N/dm), and the values are an average of two tests.

### STATIC SHEAR

Static shear is determined by laminating the pressure sensitive adhesive transfer tape to a 0.0508 mm thick piece of aluminum foil and cutting to a dimension of 12.7 cm by 1.27 cm. One end of the sample is adhered to a stainless steel panel, previously cleaned as described above, with a 2.54 cm overlap, and a weight is attached to the other end of the sample. The panel is then hung at about a 2° tilt from the vertical, to assure a shear mode failure, and the time in which the sample pulls away from the panel is measured in minutes (min). The test is discontinued after 10,000 minutes. A 1000 gram weight is used for the room temperature shear (RT). The elevated temperature shear is conducted by hanging one set of samples in a 70°C oven using a 500 gram weight (500 g), and by hanging a second set using a 1000 gram weight (1000 g). The reported values represent the average value of two tests.

### HEAT SEALABLE FILMS

Film A - A heat sealable 0.0254 mm (1 mil) thick biaxially oriented polypropylene film was prepared by heating one surface of the film over a heated Teflon™ polymer (DuPont 958-203) coated roller that had been polished to a 0.8 - 1.3 micrometer, Ra, at a speed of 23 meters per minute. The roller surface was heated to a surface temperature of 260°C. The web contacted 2-4 millimeters of the roll surface. The film had a surface finish of about 1.4 micrometers Ra with 41 peaks per centimeter. The surface was measured using a Surtronic 3 Profilometer (from Taylor-Hossen, Leicester, England) using a #1502 stylus, long stroke, and 50 bandwidth. The first noted bond strength (T-peel, ASTM D1876-72) was noted at 149°C and was about 1.5 kg/cm. Preparation of the film is disclosed in co-pending application U.S. Serial No. 08/047,807 (Hyde), incorporated herein by reference.

Film B - A heat sealable 0.0635 mm (2.5 mil) thick ethylene vinyl acetate film having 6% vinyl acetate (VA24 - from Consolidated Thermoplastics Co. of Schaumburg, IL).

Film C - A heat sealable 0.0635 mm (2.5 mil) thick ethylene acrylic acid film (EA90, also designated PL50 from Consolidated Thermoplastics Co.).

Film D - A heat sealable 0.057 mm (2.25 mil) thick ethylene acrylic acid film (EA90, also designated PL50 from Consolidated Thermoplastics Co.).

### Example 1

Two sheets of Film A were heat sealed on the lateral edges and the bottom to form a rectangular pouch measuring 3.175 cm (1.25 inches) wide on a liquid form, fill, and seal machine. The pouch was then filled with a pressure sensitive adhesive composition having 90 parts isooctyl acrylate (IOA), 10 parts acrylic acid (AA), 0.25 part of benzil dimethyl ketal photoinitiator (Irgacure™ 651 from Ciba Geigy) per 100 parts of monomer ("PHR"), 0.05 PHR carbon tetrabromide (CBr₄), and 0.1 PHR para-acryloxybenzophenone. The filled package was then heat sealed at the top in the cross direction through the monomer to form individual pouches measuring 3.175 cm by 3.175 cm by about 0.356 cm thick containing 1.9 grams of composition.

The pouches were placed in a water bath that was maintained between about 21°C and 32°C and exposed to ultraviolet radiation at an intensity of about 2 mW/cm² for 8.33 minutes (UV Exp Time). The radiation was supplied from lamps having about 90% of the emissions between 300 and 400 nanometers (nm), and a peak emission at 351 nm. The molecular weight (M_{W}) and polydispersity (P) of the adhesive are shown in Table 1.

The pouches were then fed to a single screw extruder (Haake) with barrel temperatures set at about 177°C and die temperatures set at about 177°C. The pressure sensitive adhesive was extruded to a thickness of 0.0508 mm onto a paper web that was treated on both sides with a silicone release coating. The coated adhesive was then exposed to a medium pressure mercury vapor lamp having an output of about 80 watts per cm and a spectral output over a range of 180 to 430 nm to provide a total energy of 100 mJ/cm². The pressure sensitive adhesive was then tested according to the above described test procedures for peel adhesion and static shear. Test results are shown in Table 1.

### Examples 2-5

Pressure sensitive adhesive tapes were prepared and tested as for Example 1 except for the changes in composition and exposure times as shown in Table 1 and as follows:

Example 3 contained 2.3 grams of adhesive composition.

Example 4 was prepared by mixing the adhesive composition and exposing to UV radiation as described above to form a syrup having a viscosity of about 3000 centipoise. The syrup was then used to fill the pouches (approximately 2.2 grams/pouch).

Example 5 included 1.0 part antioxidant (Irganox™ 1076 from Ciba Geigy) and the pouches contained 2.3 grams of adhesive composition.

**TABLE 1**

| Ex | *PI (PHR) | CBr₄ (PHR) | UV Exp Time (min) | Cross-linking Energy (mJ/cm²) | M_{W} | P | 90° Peel Adhesion (N/dm) | | Static Shear (minutes) | | |
|---|---|---|---|---|---|---|---|---|---|---|---|
| | | | | | | | RT | AGED | RT | 70°C 500g | 70°C 1000g |
| 1 | 0.25 | 0.050 | 8.33 | 100 | 859000 | 3.13 | 25.4 | 31.9 | 10000 | 10000 | 5765 |
| 2 | 0.25 | 0.150 | 4.80 | 200 | 404000 | 2.85 | 27.5 | 42.0 | 10000 | 10000 | 4360.5 |
| 3 | 0.50 | 0.050 | 4.80 | 300 | 822000 | 2.82 | 18.2 | 40.8 | 10000 | 10000 | 476.5 |
| 4 | 0.50 | 0.050 | 6.25 | 100 | 745000 | 4.28 | 22.2 | 47.8 | 10000 | 36.5 | 687.5 |
| 5 | 0.25 | 0.100 | 6.25 | 100 | 527000 | 3.14 | 21.9 | 27.8 | 10000 | 10000 | 58 |

| | | | | | | | | | | | |
|---|---|---|---|---|---|---|---|---|---|---|---|
| *PI (PHR) - Photoinitiator amount in parts per 100 parts of acrylate monomer and co-polymerizable monomer (PHR). | | | | | | | | | | | |

The data in Table 1 show that pressure sensitive adhesives having good adhesive properties can be made by the method of the invention.

The adhesive compositions of Examples 1-5 were polymerized as described above using three different cooling methods: blowing compressed air over the pouches on a metal platen chilled to -3.9°C, blowing nitrogen over the pouches on a metal platen chilled to -3.9°C, and immersing the pouches in a water bath as described above, while keeping the UV exposure time constant at 8.33 minutes. The molecular weights and polydispersities were determined and are shown in TABLE 2.

**TABLE 2**

| EX | Nitrogen Cooling | | Air Cooling | | Water Bath | |
|---|---|---|---|---|---|---|
| | M_{W} | P | M_{w} | P | M_{W} | P |
| 6 | 467,000 | 4.69 | 336,000 | 7.23 | 728,000 | 3.75 |
| 7 | 477,000 | 7.38 | 354,000 | 7.50 | 421,000 | 3.11 |
| 8 | 352,000 | 10.26 | 403,000 | 8.04 | 811,000 | 3.10 |
| 9 | 641,000 | 7.61 | 751,000 | 4.55 | 973,000 | 2.55 |
| 10 | 426,000 | 8.62 | 453,000 | 9.30 | 593,000 | 3.43 |

The results in TABLE 2 show that the polydispersity can be varied depending upon the cooling method used, and water bath cooling is preferred when a lower polydispersity value is desired.

### Examples 11 - 30

Examples 11 - 30 show various combinations of adhesive compositions and processing conditions to change the properties of the adhesive. Pressure sensitive adhesive tapes were prepared and tested as for Example 1 except for the changes in composition and exposure times as shown in Table 3 and as follows:

Examples 11-13 - Film B was used to form pouches measuring 4.06 cm by 3.81 cm by 0.66 cm thick. The pouches contained 6.6 grams of pre-adhesive composition. The water bath temperature was about 25°C.

Examples 14 - 15 - Film C was used to make pouches measuring 3.18 cm long by 3.18 cm wide by about 0.36 cm thick and containing 2.4 grams and 2.7 grams of composition, respectively.

Examples 16 - 17 - Film C was used to make pouches measuring 4.06 cm by 3.56 cm by 0.51 cm and containing 4.5 grams of pre-adhesive composition.

Examples 18 - 19 - Film C was used to make pouches measuring 4.06 cm by 3.56 cm by 0.51 cm containing 5.1 grams of pre-adhesive composition. The monomer composition was changed to 96 parts IOA and 4 parts AA.

Examples 20 - 22 - Film D was used to make pouches measuring 4.06 cm by 3.81 cm. Example 20 was 0.61 cm thick and contained 6.8 grams of pre-adhesive composition. Examples 21-22 were 0.64 cm thick and contained 6.6 grams of pre-adhesive composition.

Examples 23 - 25 - Film C was used to form filled pouches measuring 4.06 cm by 3.81 cm by 0.64 cm thick. The pouches of Example 23 contained 7.2 grams of a composition having 92 parts IOA and 8 parts AA. Pouches of Example 24 contained 6.9 grams of a composition having 94 parts IOA and 6 parts AA. Pouches of Example 25 contained 7.0 parts of a composition having 96 parts IOA and 4 parts AA.

Examples 26 - 28 - Film C was used to form filled pouches measuring 4.06 cm by 3.81 cm by 0.58 cm thick and containing 6.7 grams of a composition having 98 parts IOA and 2 parts AA.

Examples 29 - 30 - Film C was used to form filled pouches measuring 4.06 cm by 3.81 cm by 0.61 cm and containing 6.4 grams of a composition having 90 parts IOA and 10 parts AA.

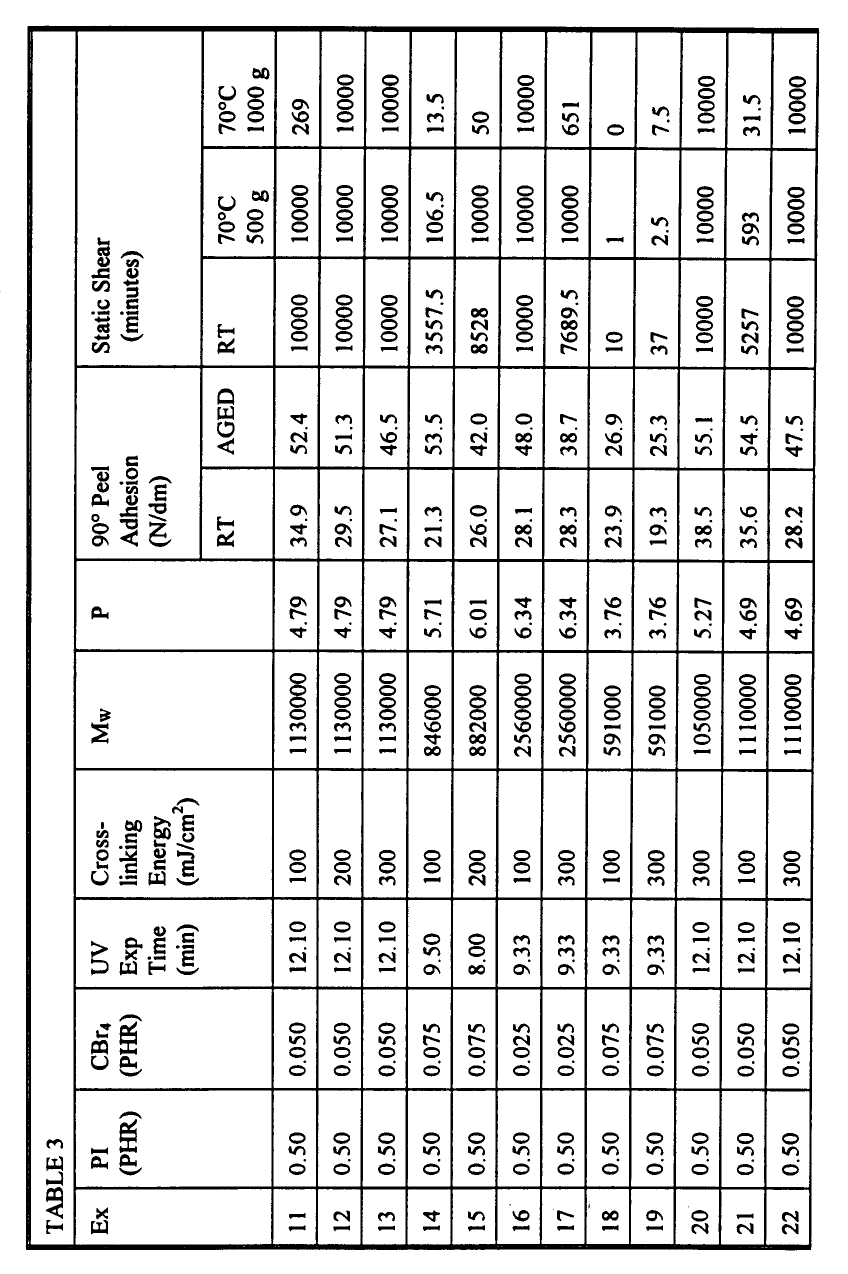

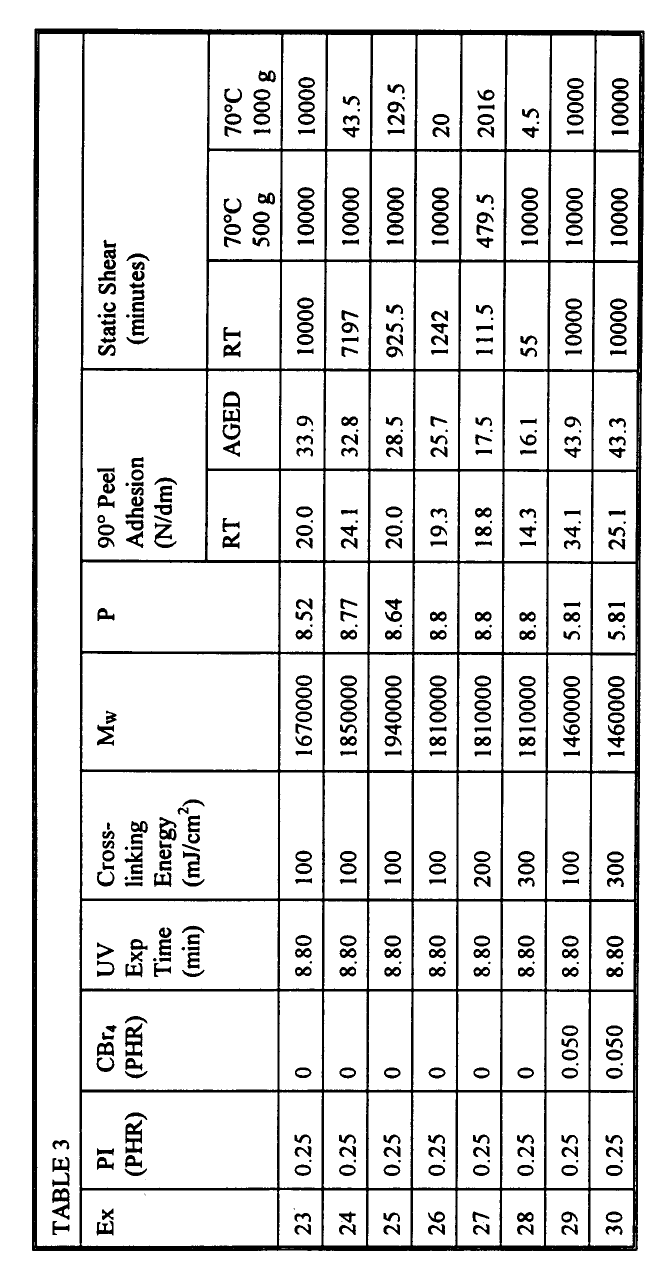

A hot melt coated pressure sensitive adhesive was prepared as in Example 26. The adhesive was then cross-linked with electron beam energy at various doses shown in TABLE 4. Test results for peel adhesion and static shear are shown in TABLE 4.

**TABLE 4**

| Dose (MRAD)* | RT Peel Adhesion (N/dm) | Static Shear (min)** |
|---|---|---|
| 0 | 27.4 | 0 |
| 3 | 19.7 | 515 |
| 5 | 17.5 | 581 |
| 7 | 15.3 | 963 |
| 9 | 16.4 | 11 |

| | | |
|---|---|---|
| * Electron beam dose shown in Megarads | | |
| ** Static shear conducted at 65°C with 500 gram weight, and 1.27 cm wide sample with a 1.27 cm overlap on panel | | |

The data in TABLE 4 show that the pressure sensitive adhesive can be crosslinked by electron beam radiation to provide useful pressure sensitive adhesives.

### Example 31

A pouch measuring 6.86 by 3.30 cm was prepared by heat sealing three edges of Film A. The pouch was filled with 10 grams of a pre-adhesive composition having 90 parts IOA, 10 parts AA, and 0.3 PHR VAZO™ 64 initiator. Most of the air was squeezed out and the fourth edge was sealed. The pouch was placed in a pail filled with 60.5°C tap water and a length of mesh with weights attached to each end was placed over the pouch to keep the pouch submerged. The pouch was held in the water for 3 hours and 54 minutes during which time incoming water was added to keep the water temperature at about 60°C. An increase in viscosity and the formation of some gas bubbles in the pouch were observed. The final water temperature was 59.5°C. The composition had polymerized to a tacky pressure sensitive adhesive state having no visible gels. This composition can be coated as a hot melt adhesive.

### Example 32

Two sheets of Film C (0.0635 mm thick film of ethylene acrylic acid) were heat sealed on the lateral edges to form a continuous tube (measuring 3.810 cm wide when flattened) on a liquid form, fill, and seal machine. The tube was then continuously filled with a pressure sensitive adhesive composition having 90 parts isooctyl acrylate (IOA), 10 parts acrylic acid (AA), 0.75 part of benzil dimethyl ketal photoinitiator (Irgacure™ 651 from Ciba Geigy), 0.075 part carbon tetrabromide, and 0.1 part para-acryloxybenzophenone. The fill rate was about 1.7 grams of composition per cm length of tube, and the filled tube was 0.635 cm thick. The filled tube with no cross-seals was then pulled through a water bath having a temperature of about 23°C and polymerized with ultraviolet radiation on a continuous basis such that the tube contained monomer as it entered the water bath under the UV lamps, and the tube contained a pressure sensitive adhesive as it was removed from underneath the lamps. The tube was exposed to ultraviolet radiation at an intensity of about 2 mW/cm² for 9 minutes and 25 seconds to polymerize the entire length of the tube. The radiation was supplied from lamps having about 90% of the emissions between 300 and 400 nanometers (nm), and a peak emission at 351 nm. The tube, measuring about 15 meters, contained a tacky pressure sensitive adhesive having no visible gels. The tube and its contents can be hot melt coated.

## Claims

1. A method of making a packaged, thermoplastic or thermosettable hot melt adhesive comprising:
(a) providing a liquid pre-adhesive composition which upon exposure to transmissive energy polymerizes to provide a thermoplastic or thermosettable hot melt adhesive;
(b) substantially completely surrounding said pre-adhesive composition with a packaging material;
(c) exposing said pre-adhesive composition to transmissive energy selected from ultraviolet radiation, visible radiation, thermal radiation, or thermal conduction; and
(d) allowing polymerization of said pre-adhesive composition to occur to provide said thermoplastic or thermosettable hot melt adhesive;
wherein said packaging material does not substantially adversely affect the adhesive properties of a hot melt coated mixture of said adhesive and said packaging material; and
wherein a hot melt coated mixture of said adhesive and said packaging material has a storage modulus when measured in torsional shear at 25°C and at 1 radian/second of between 10³ and 10⁷ Pa (10⁴ and 10⁸ dynes/cm²).

2. A method of Claim 1, wherein in step (b), said liquid pre-adhesive composition is completely surrounded with said packaging material.

3. A method of Claim 1 or 2, wherein from 3 to 100 g of liquid pre-adhesive composition is completely surrounded by said packaging material.

4. A method of one of Claims 1 to 3, wherein said liquid pre-adhesive composition is substantially completely surrounded by two substantially parallel sheets of packaging material.

5. A method of one of Claims 1 to 4, wherein said liquid pre-adhesive composition comprises:
(a) 50 to 100 parts by weight of a polymerizable component comprising at least one acrylic or methacrylic ester of a non-tertiary alkyl alcohol in which the alkyl group contains 1 to 20 carbon atoms;
(b) 0 to 50 parts by weight of a polymerizable component comprising at least one modifying monomer, other than said acrylic or methacrylic ester, copolymerizable with component (a), the sum of (a) and (b) amounting to 100 parts by weight;
(c) an effective amount of a polymerization initiator; and
(d) an effective amount of a chain transfer agent.

6. A method of Claim 5, wherein said liquid pre-adhesive composition further comprises an effective amount of a crosslinking agent.

7. A method of one of Claims 1 to 6, wherein said packaging material melts at or below the melting point of said adhesive.

8. A method of one of Claims 1 to 7, wherein said packaging material is a flexible thermoplastic polymeric film.

9. A method of Claim 8, wherein said packaging material is selected from ethylene-vinyl acetate, ethylene-acrylic acid, polypropylene, polyethylene, polybutadiene, or ionomeric films.

10. A method of one of Claims 1 to 9, wherein said transmissive energy is ultraviolet radiation.

11. A method of one of Claims 1 to 10, wherein said adhesive is a pressure sensitive adhesive at 25°C.

12. A method of one of Claims 1 to 11, wherein said thermoplastic or thermosettable hot melt adhesive is a thermoplastic hot melt adhesive.

13. A method of making two or more packages of a packaged, thermoplastic or thermosettable hot melt adhesive comprising:
(a) providing two or more portions of a liquid pre-adhesive composition which upon exposure to transmissive energy polymerizes to provide a thermoplastic or thermosettable hot melt adhesive;
(b) completely surrounding each of said portions with a packaging material;
(c) exposing said portions to transmissive energy selected from ultraviolet radiation, visible radiation, thermal radiation, or thermal conduction; and
(d) allowing polymerization of said portions to occur to provide said packages;
wherein said packaging material does not substantially adversely affect the adhesive properties of a hot melt coated mixture of said adhesive and said packaging material; and
wherein a hot melt coated mixture of said adhesive and said packaging material has a storage modulus when measured in torsional shear at 25°C and at 1 radian/second of between 10³ and 10⁷ Pa (10⁴ and 10⁸ dynes/cm²).

14. A method of making a thermoplastic or thermosettable hot melt adhesive material comprising:
(a) providing a liquid pre-adhesive composition which upon exposure to transmissive energy polymerizes to provide a thermoplastic or thermosettable hot melt adhesive;
(b) coating said pre-adhesive composition onto a sheet material;
(c) exposing said pre-adhesive composition to transmissive energy selected from ultraviolet radiation, visible radiation, thermal radiation, or thermal conduction;
(d) allowing polymerization of said pre-adhesive composition to occur to provide said thermoplastic or thermosettable hot melt adhesive; and
(e) introducing said adhesive and its sheet material into a vessel in which said adhesive and its sheet material are melted;
wherein said sheet material does not substantially adversely affect the adhesive properties of a hot melt coated mixture of said adhesive and said sheet material; and
wherein a hot melt coated mixture of said adhesive and said sheet material has a storage modulus when measured in torsional shear at 25°C and at 1 radian/second of between 10³ and 10⁷ Pa (10⁴ and 10⁸ dynes/cm²).

15. A packaged, thermoplastic or thermosettable hot melt pre-adhesive comprising a pre-adhesive composition substantially completely surrounded by a packaging material, said pre-adhesive composition being a liquid having a viscosity of less than 50,000 mPa's (centipoises) at 25°C and capable of polymerizing in the presence of transmissive energy to provide said thermoplastic or thermosettable hot melt adhesive, said packaging material selected so to not substantially adversely affect the adhesive properties of a hot melt coated mixture of a resulting adhesive from said pre-adhesive composition and said packaging material.

16. A method of making a thermoplastic or thermosettable hot melt adhesive comprising:
(a) providing a liquid pre-adhesive composition which upon exposure to transmissive energy polymerizes to provide a thermoplastic or thermosettable hot melt adhesive;
(b) substantially completely surrounding said pre-adhesive composition with a packaging material;
(c) exposing said pre-adhesive composition to transmissive energy selected from ultraviolet radiation, visible radiation, thermal radiation, or thermal conduction;
(d) allowing polymerization of said pre-adhesive composition to occur to provide said thermoplastic or thermosettable hot melt adhesive; and
(e) introducing said adhesive and its packaging material into a vessel in which said adhesive and its packaging material are melted;
wherein said packaging material does not substantially adversely affect the adhesive properties of a hot melt coated mixture of said adhesive and said packaging material; and
wherein a hot melt coated mixture of said adhesive and said packaging material has a storage modulus when measured in torsional shear at 25°C and at 1 radian/second of between 10³ and 10⁷ Pa (10⁴ and 10⁸ dynes/cm²).

17. A method of making a pressure sensitive adhesive-coated sheet comprising:
(a) providing a liquid pre-adhesive composition which upon exposure to transmissive energy polymerizes to provide a thermoplastic or thermosettable hot melt adhesive;
(b) substantially completely surrounding said pre-adhesive composition with a packaging material;
(c) exposing said pre-adhesive composition to transmissive energy selected from ultraviolet radiation, visible radiation, thermal radiation, or thermal conduction;
(d) allowing polymerization of said pre-adhesive composition to occur to provide said thermoplastic or thermosettable hot melt adhesive;
(e) introducing said adhesive and its packaging material into a vessel in which said adhesive and its packaging material are melted; and
(f) coating said melted adhesive and its packaging material onto a sheet material to form a pressure sensitive adhesive-coated sheet;
wherein, said packaging material does not substantially adversely affect the adhesive properties of a hot melt coated mixture of said adhesive and said packaging material; and
wherein a hot melt coated mixture of said adhesive and said packaging material has a storage modulus when measured in torsional shear at 25°C and at 1 radian/second of between 10³ and 10⁷ Pa (10⁴ and 10⁸ dynes/cm²).

18. A method of making a thermoplastic or thermosettable hot melt adhesive comprising:
(a) providing a liquid pre-adhesive composition which upon exposure to transmissive energy polymerizes to provide a thermoplastic or thermosettable hot melt adhesive;
(b) continuously introducing said pre-adhesive composition into a hollow profile of a polymeric film material;
(c) continuously exposing said pre-adhesive composition to transmissive energy selected from ultraviolet radiation, visible radiation, thermal radiation, or thermal conduction;
(d) continuously allowing polymerization of said pre-adhesive composition to occur to provide said thermoplastic or thermosettable hot melt adhesive; and
(e) continuously introducing said polymeric film material and its contents into a vessel in which said polymeric film material and its contents are melted;
wherein, said polymeric film material does not substantially adversely affect the adhesive characteristics of a hot melt coated mixture of said adhesive and said polymeric film material; and
wherein a hot melt coated mixture of said adhesive and said polymeric film material has a storage modulus when measured in torsional shear at 25°C and at 1 radian/second of between 10³ and 10⁷ Pa (10⁴ and 10⁸ dynes/cm²).

19. A method of making a pressure sensitive adhesive-coated sheet comprising:
(a) providing a liquid pre-adhesive composition which upon exposure to transmissive energy polymerizes to provide a thermoplastic or thermosettable hot melt adhesive;
(b) continuously introducing said pre-adhesive composition into a hollow profile of a polymeric film material;
(c) continuously exposing said pre-adhesive composition to transmissive energy selected from ultraviolet radiation, visible radiation, thermal radiation, or thermal conduction;
(d) continuously allowing polymerization of said pre-adhesive composition to occur to provide said thermoplastic or thermosettable hot melt adhesive;
(e) continuously introducing said polymeric film material and its contents into a vessel in which said polymeric film material and its contents are melted; and
(f) coating said melted polymeric film material and its contents onto a sheet material to form a pressure sensitive adhesive-coated sheet;
wherein, said polymeric film material does not substantially adversely affect the adhesive characteristics of a hot melt coated mixture of said adhesive and said polymeric film material; and
wherein a hot melt coated mixture of said adhesive and said polymeric film material has a storage modulus when measured in torsional shear at 25°C and at 1 radian/second of between 10³ and 10⁷ Pa (10⁴ and 10⁸ dynes/cm²).

## Patentansprüche

1. Verfahren zur Herstellung eines verpackten thermoplastischen oder duroplastischen Schmelzklebstoffs, umfassend:
(a) Herstellung einer flüssigen Klebstoff-Vorstufenzusammensetzung, die bei der Einwirkung von Transmissionsenergie zu einem thermoplastischen oder duroplastischen Schmelzklebstoff polymerisiert;
(b) im wesentlichen vollständiges Umhüllen der Klebstoff-Vorstufenzusammensetzung mit einem Verpackungsmaterial;
(c) Einwirkung von Transmissionsenergie, ausgewählt aus ultravioletter Strahlung, sichtbarer Strahlung, Wärmestrahlung oder Wärmeleitung, auf die Klebstoff-Vorstufenzusammensetzung; und
(d) Polymerisation der Klebstoff-Vorstufenzusammensetzung zum thermoplastischen oder duroplastischen Schmelzklebstoff;
wobei das Verpackungsmaterial die Hafteigenschaften eines als Schmelze aufgetragenen Gemisches aus Klebstoff und Verpackungsmaterial im wesentlichen nicht ungünstig beeinflußt; und
wobei ein als Schmelze aufgetragenes Gemisch aus Klebstoff und Verpackungsmaterial einen Speichermodul zwischen 10³ und 10⁷ Pa (10⁴ und 10⁸ Dyn/cm²) aufweist, gemessen in Torsion bei 25°C und bei 1 Radiant/Sekunde.

2. Verfahren nach Anspruch 1, wobei die flüssige Klebstoff-Vorstufenzusammensetzung in Schritt (b) vollständig mit dem Verpackungsmaterial umhüllt wird.

3. Verfahren nach Anspruch 1 oder 2, wobei 3 bis 100 g der flüssigen Klebstoff-Vorstufenzusammensetzung vollständig durch das Verpackungsmaterial umhüllt werden.

4. Verfahren nach einem der Ansprüche 1 bis 3, wobei die flüssige Klebstoff-Vorstufenzusammensetzung im wesentlichen vollständig durch zwei im wesentlichen parallele Schichten des Verpackungsmaterials umhüllt wird.

5. Verfahren nach einem der Ansprüche 1 bis 4, wobei die flüssige Klebstoff-Vorstufenzusammensetzung umfaßt:
(a) 50 bis 100 Gewichtsteile einer polymerisierbaren Komponente, umfassend mindestens einen Acryl- oder Methacrylester eines nicht-tertiären Alkylalkohols; in dem der Alkylrest 1 bis 20 Kohlenstoffatome enthält;
(b) 0 bis 50 Gewichtsteile einer polymerisierbaren Komponente, umfassend mindestens ein anderes modifizierendes Monomer als den Acryl- oder Methacrylester, die mit der Komponente (a) copolymerisierbar ist, wobei die Summe von (a) und (b) 100 Gewichtsteile beträgt;
(c) eine wirksame Menge eines Polymerisationsinitiators; und
(d) eine wirksame Menge eines Kettenübertragungsmittels.

6. Verfahren nach Anspruch 5, wobei die flüssige Klebstoff-Vorstufenzusammensetzung außerdem eine wirksame Menge eines Vernetzungsmittels umfaßt.

7. Verfahren nach einem der Ansprüche 1 bis 6, wobei das Verpackungsmaterial bei oder unter dem Schmelzpunkt des Klebstoffs schmilzt.

8. Verfahren nach einem der Ansprüche 1 bis 7, wobei das Verpackungsmaterial eine biegsame thermoplastische Polymerfolie ist.

9. Verfahren nach Anspruch 8, wobei das Verpackungsmaterial aus Ethylen-Vinylacetat, Ethylen-Acrylsäure, Polypropylen, Polyethylen, Polybutadien oder ionomeren Folien ausgewählt wird.

10. Verfahren nach einem der Ansprüche 1 bis 9, wobei die Transmissionsenergie ultraviolette Strahlung ist.

11. Verfahren nach einem der Ansprüche 1 bis 10, wobei der Klebstoff bei 25°C ein Haftkleber ist.

12. Verfahren nach einem der Ansprüche 1 bis 11, wobei der thermoplastische oder duroplastische Schmelzklebstoff ein thermoplastischer Schmelzklebstoff ist.

13. Verfahren zur Herstellung von zwei oder mehreren Packungen eines verpackten thermoplastischen oder duroplastischen Schmelzklebstoffes, umfassend:
(a) Herstellung einer oder mehrerer Portionen einer flüssigen Klebstoff-Vorstufenzusammensetzung, die durch die Einwirkung von Transmissionsenergie zu einem thermoplastischen oder duroplastischen Schmelzklebstoff polymerisiert;
(b) vollständiges Umhüllen jeder Portion mit einem Verpackungsmaterial;
(c) Einwirkung von Transmissionsenergie, ausgewählt aus ultravioletter Strahlung, sichtbarer Strahlung, Wärmestrahlung oder Wärmeleitung, auf die Portionen; und
(d) Polymerisation der Portionen um die Packungen bereitzustellen;
wobei das Verpackungsmaterial die Hafteigenschaften eines als Schmelze aufgetragenen Gemisches aus Klebstoff und Verpackungsmaterial im wesentlichen nicht ungünstig beeinflußt; und
wobei ein als Schmelze aufgetragenes Gemisch aus Klebstoff und Verpackungsmaterial einen Speichermodul zwischen 10³ und 10⁷ Pa (10⁴ und 10⁸ Dyn/cm²) aufweist, gemessen in Torsion bei 25°C und bei 1 Radiant/Sekunde.

14. Verfahren zum Verpacken eines thermoplastischen oder duroplastischen Schmelzklebstoffmaterials, umfassend:
(a) Herstellung einer flüssigen Klebstoff-Vorstufenzusammensetzung, die durch die Einwirkung von Transmissionsenergie zu einem thermoplastischen oder duroplastischen Schmelzklebstoff polymerisiert;
(b) Auftragen der Klebstoff-Vorstufenzusammensetzung auf ein Folienmaterial;
(c) Einwirkung von Transmissionsenergie, ausgewählt aus ultravioletter Strahlung, sichtbarer Strahlung, Wärmestrahlung oder Wärmeleitung, auf die Klebstoff-Vorstufenzusammensetzung;
(d) Polymerisation der Klebstoff-Vorstufenzusammensetzung zum thermoplastischen oder duroplastischen Schmelzklebstoff; und
(e) Einbringen des Klebstoffs und seiner Folie in ein Gefäß, in dem der Klebstoff und seine Folie geschmolzen werden;
wobei das Folienmaterial die Hafteigenschaften eines als Schmelze aufgetragenen Gemisches aus Klebstoff und Folienmaterial im wesentlichen nicht ungünstig beeinflußt; und
wobei ein als Schmelze aufgetragenes Gemisch aus Klebstoff und Folienmaterial einen Speichermodul zwischen 10³ und 10⁷ Pa (10⁴ und 10⁸ Dyn/cm²) aufweist, gemessen in Torsion bei 25°C und bei 1 Radiant/Sekunde.

15. Verpackte thermoplastische oder duroplastische Schmelzklebstoffvorstufe, umfassend eine Klebstoff-Vorstufenzusammensetzung, die im wesentlichen vollständig durch ein Verpackungsmaterial umhüllt ist, wobei die Klebstoff-Vorstufenzusammensetzung eine Flüssigkeit mit einer Viskosität von weniger als 50000 mPas (Centipoise) bei 25°C ist und fähig ist, in Gegenwart von Transmissionsenergie zum thermoplastischen oder duroplastischen Schmelzklebstoff zu polymerisieren, wobei das Verpackungsmaterial so ausgewählt wird, daß es die Hafteigenschaften eines als Schmelze aufgetragenen Gemisches aus dem aus der Klebstoff-Vorstufenzusammensetzung resultierenden Klebstoff und dem Verpackungsmaterial im wesentlichen nicht ungünstig beeinflußt.

16. Verfahren zur Herstellung eines thermoplastischen oder duroplastischen Schmelzklebstoffs, umfassend:
(a) Herstellung einer flüssigen Klebstoff-Vorstufenzusammensetzung, die durch die Einwirkung von Transmissionsenergie zu einem thermoplastischen oder duroplastischen Schmelzklebstoff polymerisiert;
(b) im wesentlichen vollständiges Umhüllen der Klebstoff-Vorstufenzusammensetzung mit einem Verpackungsmaterial;
(c) Einwirkung von Transmissionsenergie, ausgewählt aus ultravioletter Strahlung, sichtbarer Strahlung, Wärmestrahlung oder Wärmeleitung, auf die Klebstoff-Vorstufenzusammensetzung;
(d) Polymerisation der Klebstoff-Vorstufenzusammensetzung zum thermoplastischen oder duroplastischen Schmelzklebstoff; und
(e) Einbringen des Klebstoffs und seines Verpackungsmaterials in ein Gefäß, in dem der Klebstoff und sein Verpackungsmaterial geschmolzen werden;
wobei das Verpackungsmaterial die Hafteigenschaften eines als Schmelze aufgetragenen Gemisches aus Klebstoff und Verpackungsmaterial im wesentlichen nicht ungünstig beeinflußt; und
wobei ein als Schmelze aufgetragenes Gemisch aus Klebstoff und Verpackungsmaterial einen Speichermodul zwischen 10³ und 10⁷ Pa (10⁴ und 10⁸ Dyn/cm²) aufweist, gemessen in Torsion bei 25°C und bei 1 Radiant/Sekunde.

17. Verfahren zur Herstellung einer mit einem Haftkleber beschichteten Folie, umfassend:
(a) Herstellung einer flüssigen Klebstoff-Vorstufenzusammensetzung, die durch die Einwirkung von Transmissionsenergie zu einem thermoplastischen oder duroplastischen Schmelzklebstoff polymerisiert:
(b) im wesentlichen vollständiges Umhüllen der Klebstoff-Vorstufenzusammensetzung mit einem Verpackungsmaterial;
(c) Einwirkung von Transmissionsenergie, ausgewählt aus ultravioletter Strahlung, sichtbarer Strahlung, Wärmestrahlung oder Wärmeleitung, auf die Klebstoff-Vorstufenzusammensetzung;
(d) Polymerisation der Klebstoff-Vorstufenzusammensetzung zum thermoplastischen oder duroplastischen Schmelzklebstoff;
(e) Einbringen des Klebstoffs und seines Verpackungsmaterials in ein Gefäß, in dem der Klebstoff und sein Verpackungsmaterial geschmolzen werden; und
(f) Auftragen des geschmolzenen Klebstoffs und seines Verpackungsmaterials auf ein Folienmaterial, um eine mit einem Haftkleber beschichtete Folie herzustellen;
wobei das Verpackungsmaterial die Hafteigenschaften eines als Schmelze aufgetragenen Gemisches aus Klebstoff und Verpackungsmaterial im wesentlichen nicht ungünstig beeinflußt; und
wobei ein als Schmelze aufgetragenes Gemisch aus Klebstoff und Verpackungsmaterial einen Speichermodul zwischen 10³ und 10⁷ Pa (10⁴ und 10⁸ Dyn/cm²) aufweist, gemessen in Torsion bei 25°C und bei 1 Radiant/Sekunde.

18. Verfahren zur Herstellung eines thermoplastischen oder duroplastischen Schmelzklebstoffs, umfassend:
(a) Herstellung einer flüssigen Klebstoff-Vorstufenzusammensetzung, die durch die Einwirkung von Transmissionsenergie zu einem thermoplastischen oder duroplastischen Schmelzklebstoff polymerisiert;
(b) kontinuierliches Einbringen der Klebstoff-Vorstufenzusammensetzung in ein Hohlprofil aus einem polymeren Folienmaterial;
(c) kontinuierliche Einwirkung von Transmissionsenergie, ausgewählt aus ultravioletter Strahlung, sichtbarer Strahlung, Wärmestrahlung oder Wärmeleitung, auf die Klebstoff-Vorstufenzusammensetzung;
(d) kontinuierliche Polymerisation der Klebstoff-Vorstufenzusammensetzung zum thermoplastischen oder duroplastischen Schmelzklebstoff; und
(e) kontinuierliches Einbringen des polymeren Folienmaterials und seines Inhalts in ein Gefäß, in dem das polymere Folienmaterial und sein Inhalt geschmolzen werden;
wobei das polymere Folienmaterial die Hafteigenschaften eines als Schmelze aufgetragenen Gemisches aus Klebstoff und polymerem Folienmaterial im wesentlichen nicht ungünstig beeinflußt; und
wobei ein als Schmelze aufgetragenes Gemisch aus Klebstoff und polymerem Folienmaterial einen Speichermodul zwischen 10³ und 10⁷ Pa (10⁴ und 10⁸ Dyn/cm²) aufweist, gemessen in Torsion bei 25°C und bei 1 Radiant/Sekunde.

19. Verfahren zur Herstellung einer mit einem Haftkleber beschichteten Folie, umfassend:
(a) Herstellung einer flüssigen Klebstoff-Vorstufenzusammensetzung, die durch die Einwirkung von Transmissionsenergie zu einem thermoplastischen oder duroplastischen Schmelzklebstoff polymerisiert;
(b) kontinuierliches Einbringen der Klebstoff-Vorstufenzusammensetzung in ein Hohlprofil aus polymerem Folienmaterial;
(c) kontinuierliche Einwirkung von Transmissionsenergie, ausgewählt aus ultravioletter Strahlung, sichtbarer Strahlung, Wärmestrahlung oder Wärmeleitung, auf die Klebstoff-Vorstufenzusammensetzung;
(d) kontinuierliche Polymerisation der Klebstoff-Vorstufenzusammensetzung zum thermoplastischen oder duroplastischen Schmelzklebstoff;
(e) kontinuierliches Einbringen des polymeren Folienmaterials und seines Inhalts in ein Gefäß, in dem das polymere Folienmaterial und sein Inhalt geschmolzen werden; und
(f) Auftragen des geschmolzenen polymeren Folienmaterials und seines Inhalts auf ein Folienmaterial, um eine mit einem Haftkleber beschichtete Folie herzustellen;
wobei das polymere Folienmaterial die Hafteigenschaften eines als Schmelze aufgetragenen Gemisches aus Klebstoff und polymerem Folienmaterial im wesentlichen nicht ungünstig beeinflußt; und
wobei ein als Schmelze aufgetragenes Gemisch aus Klebstoff und polymerem Folienmaterial einen Speichermodul zwischen 10³ und 10⁷ Pa (10⁴ und 10⁸ Dyn/cm²) aufweist, gemessen in Torsion bei 25°C und bei 1 Radiant/Sekunde.

## Revendications

1. Méthode de préparation d'un adhésif thermofusible, thermoplastique ou thermodurcissable emballé comprenant les étapes consistant :
(a) à apporter une composition de pré-adhésif liquide qui après une exposition à une énergie de transmission, se polymérise en donnant un adhésif thermofusible thermoplastique ou thermodurcissable ;
(b) à entourer pratiquement complètement ladite composition de pré-adhésif avec un matériau d'emballage ;
(c) à exposer ladite composition de pré-adhésif à une énergie de transmission choisie parmi un rayonnement ultraviolet, un rayonnement visible, un rayonnement thermique ou un transfert de chaleur ; et
(d) à permettre à la polymérisation de ladite composition de pré-adhésif de se produire pour obtenir ledit adhésif thermofusible thermoplastique ou thermodurcissable ;
dans laquelle ledit matériau d'emballage ne nuit pratiquement pas aux propriétés d'adhésion d'un mélange déposé en fusion dudit adhésif et dudit matériau d'emballage ; et
dans laquelle un mélange déposé en fusion dudit adhésif et dudit matériau d'emballage a un module en stockage, mesuré en cisaillement en torsion à 25°C et à 1 radian/seconde, compris entre 10³ et 10⁷ Pa (10⁴ et 10⁸ dynes/cm²).

2. Méthode de la revendication 1, dans laquelle dans l'étape (b), ladite composition liquide de pré-adhésif est complètement entourée par ledit matériau d'emballage.

3. Méthode de la revendication 1 ou 2, dans laquelle de 3 à 100 g de composition liquide de pré-adhésif sont complètement entourés par ledit matériau d'emballage.

4. Méthode de l'une quelconque des revendications 1 à 3, dans laquelle ladite composition liquide de pré-adhésif est pratiquement complètement entourée par deux feuilles presque parallèles de matériau d'emballage.

5. Méthode de l'une des revendications 1 à 4, dans laquelle ladite composition de pré-adhésif liquide comprend :
(a) 50 à 100 parties en poids d'un composant polymérisable comprenant au moins un ester acrylique ou méthacrylique d'un alcool alkylique non tertiaire dans lequel le groupe alkyle contient 1 à 20 atomes de carbone ;
(b) 0 à 50 parties en poids d'un composant polymérisable comprenant au moins un monomère modifiant, autre qu'un ester acrylique ou méthacrylique, copolymérisable avec le composant (a), la somme de (a) et de (b) s'élevant à 100 parties en poids ;
(c) une quantité efficace d'un initiateur de polymérisation ; et
(d) une quantité efficace d'un agent de transfert de chaîne.

6. Méthode de la revendication 5, dans laquelle ladite composition liquide de pré-adhésif comprend en outre une quantité efficace d'un agent de réticulation.

7. Méthode de l'une quelconque des revendications 1 à 6, dans laquelle ledit matériau d'emballage fond à la temperature de fusion dudit adhésif ou en dessous.

8. Méthode de l'une quelconque des revendications 1 à 7, dans laquelle ledit matériau d'emballage est un film polymère thermoplastique souple.

9. Méthode de la revendication 8, dans laquelle ledit matériau d'emballage est choisi parmi des films d'éthylène-acétate de vinyle, d'éthylène-acide acrylique, de polypropylène, de polyéthylène de polybutadiène ou ionomères.

10. Méthode de l'une des revendications 1 à 9, dans laquelle ladite énergie de transmission est un rayonnement ultraviolet.

11. Méthode de l'une des revendications 1 à 10, dans laquelle ledit adhésif est un adhésif sensible à la pression à 25°C.

12. Méthode de l'une des revendications 1 à 11, dans laquelle ledit adhésif thermofusible thermoplastique ou thermodurcissable est un adhésif thermofusible thermoplastique.

13. Méthode de préparation de deux emballages ou plus d'un adhésif thermofusible, thermoplastique ou thermodurcissable emballé comprenant les étapes consistant :
(a) à apporter deux portions ou plus d'une composition de pré-adhésif liquide qui, après exposition à une énergie de transmission, se polymérisent en donnant un adhésif thermofusible thermoplastique ou thermodurcissable ;
(b) à entourer complètement lesdites portion avec un matériau d'emballage ;
(c) à exposer lesdites portions à une énergie de transmission choisie parmi un rayonnement ultraviolet, un rayonnement visible, un rayonnement thermique ou un transfert de chaleur ; et
(d) à permettre à la polymérisation desdites portions de se produire pour obtenir lesdits emballages ;
dans laquelle ledit matériau d'emballage ne nuit pratiquement pas aux propriétés d'adhésion d'un mélange déposé en fusion dudit adhésif et dudit matériau d'emballage ; et
dans laquelle un mélange déposé en fusion dudit adhésif et dudit matériau d'emballage a un module en stockage, mesuré en cisaillement en torsion à 25°C et à 1 radian/seconde, compris entre 10³ et 10⁷ Pa (10⁴ et 10⁸ dynes/cm²).

14. Méthode de préparation d'un matériau adhésif thermofusible, thermoplastique ou thermodurcissable comprenant les étapes consistant :
(a) à apporter une composition liquide de pré-adhésif qui, après exposition à une énergie de transmission, se polymérise en donnant un adhésif thermofusible thermoplastique ou thermodurcissable ;
(b) à déposer ladite composition de pré-adhésif sur un matériau en feuille ;
(c) à exposer ladite composition de pré-adhésif à une énergie de transmission choisie parmi un rayonnement ultraviolet, un rayonnement visible, un rayonnement thermique ou un transfert de chaleur ;
(d) à permettre à la polymérisation de ladite composition de pré-adhésif de se produire pour obtenir ledit adhésif thermofusible thermoplastique ou thermodurcissable ; et
(e) à introduire ledit adhésif et son matériau en feuille dans un récipient dans lequel l'adhésif et son matériau en feuille sont fondus ;
dans laquelle ledit matériau en feuille ne nuit pratiquement pas aux propriétés d'adhésion d'un mélange déposé en fusion dudit adhésif et dudit matériau en feuille ; et
dans laquelle un mélange déposé en fusion dudit adhésif et dudit matériau en feuille a un module en stockage, mesuré en cisaillement en torsion à 25°C et à 1 radian/seconde, compris entre 10³ et 10⁷ Pa (10⁴ et 10⁸ dynes/cm²).

15. Pré-adhésif thermofusible, thermoplastique ou thermodurcissable emballé comprenant une composition de pré-adhésif pratiquement complètement entourée d'un matériau d'emballage, ladite composition de pré-adhésif étant un liquide ayant une viscosité inférieure à 50 000 mPa.s (centipoises) à 25°C et capable de se polymériser en présence d'une énergie de transmission pour donner ledit adhésif thermofusible thermoplastique ou thermodurcissable, ledit matériau d'emballage étant choisi de façon à ne pratiquement pas nuire aux propriétés d'adhésion d'un mélange déposé en fusion d'un adhésif obtenu à partir de ladite composition de pré-adhésif et dudit matériau d'emballage.

16. Méthode de préparation d'un adhésif thermofusible, thermoplastique ou thermodurcissable comprenant les étapes consistant :
(a) à apporter une composition de liquide pré-adhésif qui, après exposition à une énergie de transmission, se polymérise en donnant un adhésif thermofusible thermoplastique ou thermodurcissable ;
(b) à entourer pratiquement complètement ladite composition de pré-adhésif avec un matériau d'emballage ;
(c) à exposer ladite composition de pré-adhésif à une énergie de transmission choisie parmi un rayonnement ultraviolet, un rayonnement visible, un rayonnement thermique ou un transfert de chaleur ;
(d) à permettre à la polymérisation de ladite composition de pré-adhésif de se produire pour obtenir ledit adhésif thermofusible thermoplastique ou thermodurcissable ; et
(e) à introduire ledit adhésif et son matériau d'emballage dans un récipient dans lequel l'adhésif et son matériau d'emballage sont fondus ;
dans laquelle ledit matériau d'emballage ne nuit pratiquement pas aux propriétés d'adhésion d'un mélange déposé en fusion dudit adhésif et dudit matériau d'emballage ; et
dans laquelle un mélange déposé en fusion dudit adhésif et dudit matériau d'emballage a un module en stockage, mesuré en cisaillement en torsion à 25°C et à 1 radian/seconde, compris entre 10³ et 10⁷ Pa (10⁴ et 10⁸ dynes/cm²).

17. Méthode de préparation d'une feuille revêtue d'un adhésif sensible à la pression comprenant les étapes consistant :
(a) à apporter une composition liquide de pré-adhésif qui après exposition à une énergie de transmission se polymérise en donnant un adhésif thermofusible thermoplastique ou thermodurcissable ;
(b) à entourer pratiquement complètement ladite composition de pré-adhésif avec un matériau d'emballage ;
(c) à exposer ladite composition de pré-adhésif à une énergie de transmission choisie parmi un rayonnement ultraviolet, un rayonnement visible, un rayonnement thermique ou un transfert de chaleur ;
(d) à permettre à la polymérisation de ladite composition de pré-adhésif de se produire pour obtenir ledit adhésif thermofusible thermoplastique ou thermodurcissable ;
(e) à introduire ledit adhésif et son matériau d'emballage dans un récipient dans lequel l'adhésif et son matériau d'emballage sont fondus ; et
(f) à déposer ledit adhésif et son matériau d'emballage fondus sur un matériau en feuille pour former une feuille revêtue d'un adhésif sensible à la pression,
dans laquelle ledit matériau d'emballage ne nuit pratiquement pas aux propriétés d'adhésion d'un mélange déposé en fusion dudit adhésif et dudit matériau d'emballage ; et
dans laquelle un mélange déposé en fusion dudit adhésif et dudit matériau d'emballage a un module en stockage, mesuré en cisaillement en torsion à 25°C et à 1 radian/seconde, compris entre 10³ et 10⁷ Pa (10⁴ et 10⁸ dynes/cm²).

18. Méthode de préparation d'un adhésif thermofusible, thermoplastique ou thermodurcissable comprenant les étapes consistant :
(a) à apporter une composition liquide de pré-adhésif qui après exposition à une énergie de transmission se polymérise en donnant un adhésif thermofusible thermoplastique ou thermodurcissable ;
(b) à introduire en continu ladite composition de pré-adhésif dans un profilé creux d'un matériau de film polymère ;
(c) à exposer ladite composition de pré-adhésif à une énergie de transmission choisie parmi un rayonnement ultraviolet, un rayonnement visible, un rayonnement thermique ou un transfert de chaleur ;
(d) à permettre à la polymérisation de ladite composition de pré-adhésif de se produire en continu pour obtenir ledit adhésif thermofusible thermoplastique ou thermodurcissable ; et
(e) à introduire en continu ledit matériau de film polymère et son contenu dans un récipient dans lequel ledit matériau de film polymère et son contenu sont fondus ;
dans laquelle ledit matériau de film polymère ne nuit pratiquement pas aux caractéristiques d'adhésion d'un mélange déposé en fusion dudit adhésif et dudit matériau de film polymère ; et
dans laquelle un mélange déposé en fusion dudit adhésif et dudit matériau de film polymère a un module en stockage, mesuré en cisaillement en torsion à 25°C et à 1 radian/seconde, compris entre 10³ et 10⁷ Pa (10⁴ et 10⁸ dynes/cm²).

19. Méthode de préparation d'une feuille revêtue d'un adhésif sensible à la pression comprenant les étapes consistant :
(a) à apporter une composition de pré-adhésif liquide qui, après exposition à une énergie de transmission, se polymérise en donnant un adhésif thermofusible thermoplastique ou thermodurcissable ;
(b) à introduire en continu ladite composition de pré-adhésif dans un profilé creux d'un matériau de film polymère ;
(c) à exposer en continu ladite composition de pré-adhésif à une énergie de transmission choisie parmi un rayonnement ultraviolet, un rayonnement visible, un rayonnement thermique ou un transfert de chaleur ;
(d) à permettre à la polymérisation de ladite composition de pré-adhésif de se produire en continu pour obtenir ledit adhésif thermofusible thermoplastique ou thermodurcissable ;
(e) à introduire en continu ledit matériau de film polymère et son contenu dans un récipient dans lequel ledit matériau de film polymère et son contenu sont fondus ; et
(f) à déposer ledit matériau de film polymère et son contenu fondus sur un matériau en feuille pur former une feuille revêtue d'adhésif sensible à la pression;
dans laquelle ledit matériau de film polymère ne nuit pratiquement pas aux caractéristiques d'adhésion d'un mélange déposé en fusion dudit adhésif et dudit matériau de film polymère ; et
dans laquelle un mélange déposé en fusion dudit adhésif et dudit film polymère a un module en stockage, mesuré en cisaillement en torsion à 25°C et à 1 radian/seconde, compris entre 10³ et 10⁷ Pa (10⁴ et 10⁸ dynes/cm²).
